# EUROPEAN PATENT APPLICATION

(11) **EP 4 841 721 A1**
(43) Date of publication of application: **18.11.2026**
(21) Application number: 25176539.2
(22) Date of filing: 15.05.2025
(51) Int. Cl.: H01M 8/04291, H01M 8/0438, H01M 8/04492, H01M 8/04537

(54) **METHOD FOR DETERMINING AND MONITORING A DEGREE OF FLOODING IN A PEM FUEL CELL**

(71) Applicant: Carl Freudenberg KG, 69469 Weinheim (DE)
(72) Inventor: XU, Hong, 80337 München (DE); MACK, Florian, 83278 Traunstein (DE)

(57) **Abstract**

The present invention is directed to a method for determining and monitoring a degree of flooding in a PEM fuel cell, characterized by comprising the steps:
measuring output voltage values of the PEM fuel cell as a function of time over a time window and determining a normalized standard deviation *σ(V_{cell})ₙₒᵣₘ* of measured cell voltage values;
within the time window determining a pressure drop *Δp_{anode}* of hydrogen flow over an anode flow field of the PEM fuel cell and obtaining a volume flow rate *Q_{anode}* of the anode hydrogen flow and determining a normalized ratio (*Δp_{anode}*/*Q_{anode}*)*ₙₒᵣₘ*;
within the time window determining a pressure drop *Δp_{cathode}* of air flow over a cathode flow field of the PEM fuel cell and obtaining a volume flow rate *Q_{cathode}* of the cathode air flow and determining a normalized ratio (*Δp_{cathode}*/*Q_{cathode}*)*ₙₒᵣₘ*;
determining a degree of flooding DoF as a function of the quantities *σ(V_{cell})ₙₒᵣₘ,* (*Δp_{anode}*/*Q_{anode}*)*ₙₒᵣₘ*; and (*Δp_{cathode}*/*Q_{cathode}*)*ₙₒᵣₘ*, wherein the DoFfunction is defined such that the function is strictly monotonously rising with each of the afore-mentioned three quantities; and
issuing a flooding prewarning if the degree of flooding is greater than a first threshold value and smaller than a second threshold value larger than the first threshold value, and issuing a flooding alarm if the degree of flooding value exceeds the second threshold value.

## Description

The present invention is directed to a method for determining and monitoring a degree of flooding in a PEM fuel cell.

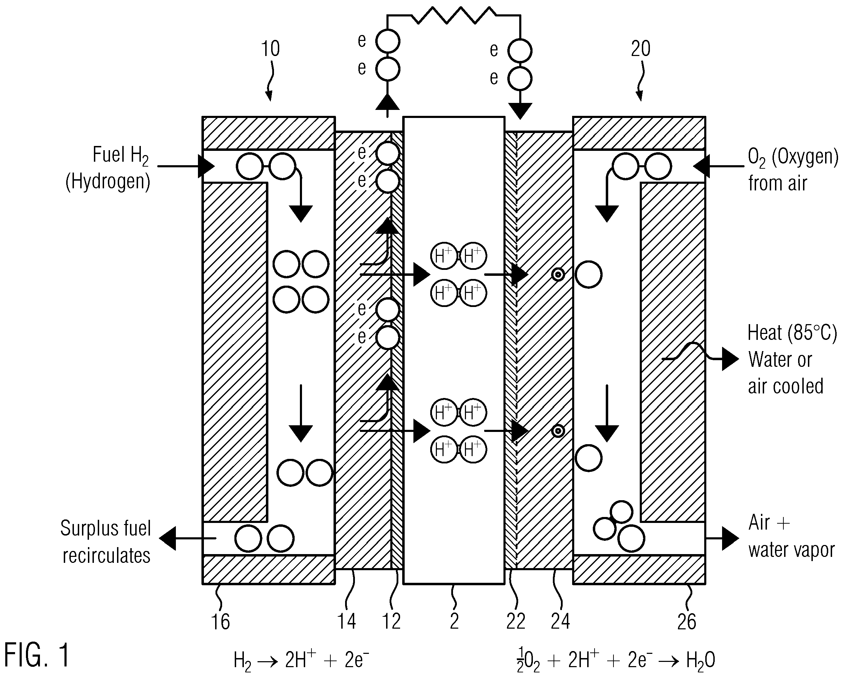

Fuel cells use oxidizable fuel gas, e.g. hydrogen, and oxygen (air) to produce energy. But unlike combustion engines, fuel cells utilize electrodes with an electrolyte in between to induce electro-chemical reactions at the electrodes (anode and cathode) to generate electrical energy. An important fuel cell type are the so-called PEM (Proton Exchange Membrane) fuel cells. The design of a PEM fuel cell is schematically illustrated in the cross-sectional view shown in Fig. 1. The central component of this fuel cell is a polymer membrane 2 which is impermeable to gases (and electrons) but conducts protons (H⁺) and which acts as electrolyte between anode 10 and cathode 20. The anode 10 comprises a porous gas diffusion layer 14 (typically made of carbon cloth or carbon fibre paper), wherein this gas diffusion layer 14 is in contact with a flow field plate (bipolar plate) 16. The anode flow field plate 16 has an inlet through which H₂ fuel gas is supplied which is distributed to flow along a flow field of multiple parallel flow channels in contact with the gas diffusion layer 14 which is on the side opposite to the flow field plate 16 covered by a catalyst layer 12; surplus H₂ which did not react at the catalyst layer 12 leaves through an outlet of the anode flow field plate 16. On the opposite cathode 20 side of the membrane 2 there is a similar arrangement of a catalyst layer 22 on the membrane 2, contacted by a cathode gas diffusion layer 24 which in turn is in contact with a cathode flow field plate 26. The cathode flow field plate 26 has an inlet for receiving a metered flow of air that is passed through a flow field including multiple parallel flow channels so that the air flow is passing along and through the gas diffusion layer 24 and to the catalyst layer 22 where a fraction of the oxygen O₂ molecules reacts as described below. Remaining gases flow along the cathode flow field leave the cathode flow field plate 26.

As the fuel stream of H₂ flows through the anode flow field plate 16 H₂ also diffuses through the gas diffusion layer 14 to the catalyst layer 12 which induces a reaction splitting H₂ into two electrons (2 e⁻) and two protons (2 H⁺): H₂ → 2e⁻ + 2H⁺. The protons H⁺ travel through proton exchange membrane 2, while the electrons are forced, because the proton exchange membrane 2 blocks passage of electrons, to bypass the membrane by flowing through the anode gas diffusion layer 24 and an anode part in contact with an external circuit which conducts electrical current to the opposite side of the membrane 2 to the cathode 20 and into the gas diffusion layer 24 on the cathode side. The electrical current in the external circuit can be used to perform work, e.g. by driving an electric motor. Close to the catalyst layer 22 on the cathode gas diffusion layer 24 diffused protons H⁺ react with electrons e⁻ conducted by the external circuit and with the oxygen O₂ from the air flow: $\frac{1}{2} {O}_{2} + 2 {H}^{+} + 2 {e}^{-} \to {H}_{2} O$, wherein this reaction is exothermic so that a hot mixture of air and vapour is produced. As can be seen from the reaction equations, *n* mol O₂ per unit time and 2*n* mol H₂ per unit time are consumed to support the reaction. However, since it is practically not feasible to completely consume the H₂ feed flow or to completely remove all oxygen from the air feed flow, each of the feed flows is enhanced to be greater than the stoichiometric rate by a surplus factor which is usually denoted by λ, wherein for the anode feed flow H₂ a typical λ value is 1.2 and for cathode air feed flow a typical λ value is 2.0. In principle, the factor λ can also be less than 1 which results in gas starvation.

Effective water management is a critical issue for the operation of PEM fuel cells. On the one hand, it is known that for a proper operation of proton exchange membrane an adequate amount of water should remain absorbed in the membrane to ionize acid groups of the membrane material. On the other hand, excessive water accumulation in key components of the cell, such as in the catalyst layers, gas diffusion layers and in the flow channels of the flow field plates of anode and cathode often cause detrimental effects, including a reduced cell output voltage, increased output voltage fluctuations, and a shortened operational lifespan of the cell.

Conventional water flooding detection methods are categorized into:
(1) physical measurements (e.g. relative humidity measurements by RH sensors in the cell, cell electrical resistance measurements, and current density distribution measurements), as for example described in the Article "Diagnostic tools in PEM fuel cell research: Part II Physical/chemical methods" by Jinfeng Wu et al., International Journal of Hydrogen Energy 33 (2008), pages 1747-1757;
(2) electro-chemical measurements (e.g. polarization curve, impedance spectroscopy (EIS), etc.), as for example described in the Article "Diagnostic tools in PEM fuel cell research: Part I electro-chemical techniques" by Jinfeng Wu et al., International Journal of Hydrogen Energy 33 (2008), pages 1735-1746; and
(3) imaging techniques (e.g. X-ray imaging, neutron imaging, etc.).

However, in-situ and real-time monitoring methods suitable for industrial applications are very limited. The current limitations can be summarized as follows:
Although in methods based on physical measurements some physical parameters (temperature T, relative humidity RH, pressure drop, etc.) can be accurately monitored during cell operation, such physical parameters are generally not directly sensitive or indicative for flooding events. Depending on the measurement location, the measured values may only reflect local information and mostly do not have a sufficient correlation with increasing water accumulation. Therefore, setting reasonable threshold conditions for issuing a prewarning for an upcoming flooding event or issuing a flooding alarm is very challenging. In the article "Relationship between pressure drop and cell resistance as a diagnostic tool for PEM fuel cells" by F. Barbir et al., Journal of Power Sources 141 (2005) 96-101, it is mentioned that an increase in pressure drop, in particular on the cathode side of a PEM fuel cell, is a reliable indicator of PEM fuel cell flooding. In US 6 103 309 B1 a method is described for monitoring PEM fuel cells, wherein the pressure drop across the H₂ and/or O₂ flow field is monitored and compared to predetermined thresholds for unacceptability. Another article "Novel approach to determine cathode two-phase pressure drop of proton exchange membrane fuel cell and its application on water management" by Y. Li et al., Applied Energy 190 (2017) 713-724 describes monitoring of cathode pressure drop for detecting flooding, but requires measurement of the curve of pressure drop versus gas volume flow rate and thus is disruptive, i.e. cannot be applied during normal operation of the fuel cell with constant air volume flow rate supplied to the cathode.

Among the electro-chemical measurements, the determination of the polarization curve is one important method which requires that a plot of cell potential against current density under a set of constant operating conditions is recorded for characterizing the performance of fuel cells. This on the one hand requires time consuming acquisition of large amounts of data and cannot easily be carried out without interrupting normal operation of fuel cells. Another widely used electro-chemical method is electro-chemical impedance spectroscopy (EIS) which is non-disruptive to cell operation and offers valuable information regarding affected cathodic reaction due to flooding. However, it is not sensitive to the level of anode flooding due the high diffusion rate of hydrogen gas, unless the anode is already fully flooded, resulting in hydrogen starvation. In addition, EIS measurements require extended measuring periods (minutes to hours) to yield reliable results.

In the above-mentioned article "Diagnostic tools in PEM fuel cell research: Part I electro-chemical techniques" by Jinfeng Wu et al., it is described the flooding tends to cause rather erratic cell voltage behaviour. i.e. sudden voltage fluctuations due to liquid water accumulation and expulsion inside the flow channels of the flow fields of anode and cathode.

As regards the imaging techniques, X-ray and neutron imaging are direct monitoring methods to visualize the distribution of water in fuel cell components. However, the major limitations of the imaging techniques are the small field of view and the lack of applicability for industrial size fuel cell stacks and systems.

Since water accumulation incidents are dynamically developing in fuel cells, occurring within seconds to minutes and potentially causing disruptions of operation and irreversible material degradation within similar time scales, an efficient flooding monitoring in fuel cells is an urgent requirement.

Thus, it is an object of the present invention to provide real-time flooding monitoring and alerting techniques for fuel cells to prevent irreversible damages and to ensure an optimal service life for fuel cells; such monitoring should be in-situ, non-disruptive and fast-responding to water flooding incidents in fuel cells. In addition, such monitoring techniques should be applicable for individual fuel cells as well as for fuel cell stacks.

According to the present invention a method for determining and monitoring a degree of flooding in a PEM fuel cell comprises the steps:
measuring output voltage values of the PEM fuel cell as a function of time over a time window and determining a normalized standard deviation ***σ**(V_{cell})ₙₒᵣₘ* of measured cell voltage values;
within the time window determining a pressure drop *Δp_{anode}* of hydrogen flow over an anode flow field of the PEM fuel cell and obtaining a volume flow rate *Q_{anode}* of the anode hydrogen flow and determining a normalized ratio (*Δp_{anode}*/*Q_{anode}*)*ₙₒᵣₘ*;
within the time window determining a pressure drop *Δp_{cathode}* of air flow over a cathode flow field of the PEM fuel cell and obtaining a volume flow rate *Q_{cathode}* of the cathode air flow and determining a normalized ratio (*Δp_{cathode}*/*Q_{cathode}*)*ₙₒᵣₘ*;
determining a degree of flooding DoF as a function of the terms ***σ** (V_{cell})ₙₒᵣₘ,* (*Δp_{anode}*/*Q_{anode}*)*ₙₒᵣₘ* and (*Δp_{cathode}*/*O_{cathode}*)*ₙₒᵣₘ*, wherein the *DoF* function is defined such that the function is strictly monotonously rising with each of the afore-mentioned three terms; and
issuing a flooding prewarning if the degree of flooding value is greater than a first threshold value and smaller than a second threshold value larger than the first threshold value, and issuing a flooding alarm if the degree of flooding value exceeds the second threshold value.

The measurement variables of the method are the output voltage of the PEM fuel cell and the pressure drops *Δp* over the anode and the cathode, wherein the pressure drop *Δp* is determined by the difference *pᵢₙₗₑₜ - pₒᵤₜₗₑₜ* of the measured pressure values at the inlet of the flow field of the PEM fuel cell minus the pressure at the outlet of the flow field of the respective one of the anode and the cathode. The output voltage values of the PEM fuel cell are acquired as a function of time over a time window as a time series, wherein a standard deviation of the acquired output voltage values is determined to obtain a measure of fluctuation of the cell output voltage. The pressure drops *Δp* over the electrodes are divided by the volume flow rate of gas supplied to the respective electrode. The volume flow rate can either be measured or obtained by the setting value of the gas supply to the respective electrode. The pressure drops over the electrodes can also be determined as time series over the time window, and an average value of the respective pressure drop can be determined. The determined quantities are "normalized" to obtain dimensionless (without units) figures, and in a preferred embodiment the normalization is calculated such that the range between the minimum and the maximum expectation value of the respective quantity is at least approximately mapped to the interval [0...1].

Based on the three quantities ***σ**(V_{cell})ₙₒᵣₘ*, (*Δp_{anode}*/*Q_{anode}*)*ₙₒᵣₘ* and (*Δp_{cathode}*/*Q_{cathode}*)*ₙₒᵣₘ* a degree of flooding is determined as a function of ***σ** (V_{cell})ₙₒᵣₘ,* (*Δp_{anode}*/*Q_{anode}*)*ₙₒᵣₘ* and (*Δp_{cathode}*/*Q_{cathode}*)*ₙₒᵣₘ*, wherein the function is strictly monotonously rising with each of the quantities ***σ**(V_{cell})ₙₒᵣₘ*, (*Δp_{anode}*/*Q_{anode}*)*ₙₒᵣₘ* and (*Δp_{cathode}*/*Q_{cathode}*)*ₙₒᵣₘ*. In other words the DoF function value increases if one goes to increasing values along any one of the three axes ***σ**(V_{cell})ₙₒᵣₘ,* (*Δp_{anode}*/*Q_{anode}*)*ₙₒᵣₘ* and (*Δp_{cathode}*/*Q_{cathode}*)*ₙₒᵣₘ.* This also implies that the DoF function value increases if two of or all three quantities ***σ**(V_{cell})ₙₒᵣₘ*, (*Δp_{anode}*/*Q_{anode}*)*ₙₒᵣₘ* and (*Δp_{cathode}*/*Q_{cathode}*)*ₙₒᵣₘ* increase.

The determined degree of flooding is subject to a two-step threshold comparison. If the degree of flooding is below a first threshold value, the PEM fuel cell is considered to be in save operational conditions. If the degree of flooding exceeds the first threshold value but is below a second threshold value larger than the first threshold value, the PEM fuel cell is considered to be in a critical state of increased humidity which could develop into a flooding event, in this case a flooding pre-warning is issued which is supposed to trigger automatic control algorithms for improving the operational conditions of the PEM fuel cell or catch the attention of a human operator to take intervening control measures to improve the operational conditions of the PEM fuel cell. The second threshold should be set such that a degree of flooding value above the second threshold is a save indication for flooding in the PEM fuel cell. If the degree of flooding value exceeds the second threshold a flooding alarm is issued which could trigger automatic control operations to minimize damages in the PEM fuel cell and which should alert any human operator to take intervening measures to minimize damages to the PEM fuel cell. It has been found that the occurrence of cell voltage fluctuations (resulting in an increased standard deviation) combined with increased pressure drop in one or both of anode and cathode caused by the presence of water in the flow channels results according to the invention in a degree of flooding value that strongly correlates with the degree of humidity within the PEM fuel cell.

In a preferred embodiment, for the normalization of the determined quantities, an extended initial calibration run is carried out with the PEM fuel cell. This calibration run includes (i) operating the PEM fuel cell at dry operating conditions for a first calibration period, and (II) operating the PEM fuel cell at wet operating conditions for a second calibration period. In the first calibration period data are acquired as a function of time, the standard deviation of the measured cell voltage values is determined, and average values are determined, and the determined standard deviation is stored as minimum standard deviation and the average is stored as minimal ratio. During the second calibration period the same data as mentioned above are acquired and the determined standard deviation is stored as maximum standard deviation and the average is stored as maximal ratio. This calibration approach assumes that under wet operating conditions during the second calibration period all three quantities are at their maximum values, whereas during the first calibration period under dry operating conditions all three quantities are at their minimum expectation values.

These minimum and maximum expectation values of the three quantities can be used in the following manner to determine normalized values of the three quantities as follows:
the normalized standard deviation ***σ** (V_{cell})ₙₒᵣₘ* of cell voltage values is calculated from the standard deviation ***σ** (V_{cell})_{measured}* of measured cell voltage values by: $σ {\left({V}_{cell}\right)}_{norm} = \frac{σ {\left({V}_{cell}\right)}_{measured} - σ {\left({V}_{cell}\right)}_{min}}{σ {\left({V}_{cell}\right)}_{max} - σ {\left({V}_{cell}\right)}_{min}}$
the normalized anode ratio (*Δp_{anode}*/*Q_{anode}*)*ₙₒᵣₘ* is calculated for the measured ratio (*Δp_{anode}*/*Q_{anode}*)*_{measured}* by: ${\left(\frac{{Δp}_{anode}}{{Q}_{anode}}\right)}_{{norm}^{}} = \frac{{\left(\frac{{Δp}_{anode}}{{Q}_{anode}}\right)}_{measured} - {\left(\frac{{Δp}_{anode}}{{Q}_{anode}}\right)}_{min}}{{\left(\frac{{Δp}_{anode}}{{Q}_{anode}}\right)}_{max} - {\left(\frac{{Δp}_{anode}}{{Q}_{anode}}\right)}_{min}}$
and the normalized cathode ratio (*Δp_{cathode}*/*Q_{cathode}*)*ₙₒᵣₘ* is calculated for the measured ratio (*Δp_{cathode}*/*Q_{cathode}*)*_{measured}* by: ${\left(\frac{{Δp}_{cathode}}{{Q}_{cathode}}\right)}_{norm} = \frac{{\left(\frac{{Δp}_{cathode}}{{Q}_{cathode}}\right)}_{measured} - {\left(\frac{{Δp}_{cathode}}{{Q}_{cathode}}\right)}_{min}}{{\left(\frac{{Δp}_{cathode}}{{Q}_{cathode}}\right)}_{max} - {\left(\frac{{Δp}_{cathode}}{{Q}_{cathode}}\right)}_{min}}$

In a preferred embodiment dry operating conditions include a relative humidity RH of air and hydrogen flow below 20% at an elevated operating temperature of about 90°C and wet operating conditions include a relative humidity RH of air and hydrogen flow above 90% at a low operating temperature of about 50°C.

In a preferred embodiment the standard deviation ***σ**(V_{cell})_{measured}* of measured cell output voltage values is calculated as a rolling standard deviation with the time window being a moving time window. The rolling standard deviation follows the "true" current standard deviation more closely compared to an approach using fixed (non-moving) time windows subsequently to each other.

In a preferred embodiment each of the ratios of pressure drop of hydrogen flow across the anode flow field of the PEM fuel cell to the anode volume flow rate (*Δp_{anode}* / *Q_{anode}*)_{measured} of the hydrogen flow, and of air flow pressure drop over the cathode flow field of the PEM fuel cell to the air volume flow rate *(Δp_{cathode}* / *Q*_{*cath*o*de*})_{measured} of the cathode air flow is determined as moving average value in the moving time window.

In a preferred embodiment the extension of the time window is within the range from 10 seconds to 60 seconds. Time windows at the lower end of this range, for example time window of 10 seconds or 15 seconds, are preferred since the resulting determined degree of flooding *DoF* is closer to the actual current state of flooding so that the monitoring results are indeed "real-time results" considering the development time scale of flooding events.

In a preferred embodiment the degree of flooding (*DoF*) function is defined as $DoF = {\left[σ{\left({V}_{cell}\right)}_{norm}\right]}^{α} + {\left[{\left(\frac{{Δp}_{cathode}}{{Q}_{cathode}}\right)}_{norm}\right]}^{β} + {\left[{\left(\frac{{Δp}_{anode}}{{Q}_{anode}}\right)}_{norm}\right]}^{γ}$ wherein **α,** β, and **γ** are real, positive exponents greater than 1.

In a preferred embodiment the exponents α, β, and γ, fulfil the relation: α ≤ β ≤ γ. Since all exponents are greater than 1 this means that the normalized pressure drops enter the formular with greater weightings compared to the normalized standard deviation of the cell output voltage, and the normalized anode pressure drop enters with greater weighting than the normalized cathode pressure drop.

In a preferred embodiment the exponent α is within the interval [1.25, 1.75], the exponent β is within the interval [1.75, 2.25], and the exponent **γ** is within the interval [2.75, 3.25]. Preferably, the exponent **α** is 1.5, the exponent β is 2, and the exponent **γ** is 3.

Method for determining and monitoring a degree of flooding in PEM fuel cells arranged in series in a fuel cell stack, characterized by comprising the steps:
measuring output voltage values of the PEM fuel cell as a function of time over a time window and determining a normalized standard deviation ***σ**(V_{cell})ₙₒᵣₘ* of measured cell voltage values for each of the PEM fuel cells in the fuel cell stack;
within the time window determining a total pressure drop of hydrogen flow over the anode flow fields of the PEM fuel cells of the fuel cell stack, dividing the total pressure drop over the anodes of the fuel cell stack by the number of fuel cells in the fuel cell stack to determine an average anode pressure drop per fuel cell *Δp_{anode}*, obtaining a volume flow rate *Q_{anode}* of the anode hydrogen flow and determining a normalized ratio (*Δp_{anode}*/*Q_{anode}*)*ₙₒᵣₘ*;
within the time window determining a total pressure drop *Δp_{cathode}* of air flow over the cathode flow fields of the PEM fuel cells of the fuel cell stack, dividing the total pressure drop over the cathodes of the fuel cell stack by the number of fuel cells in the fuel cell stack to determine an average cathode pressure drop per fuel cell *Δp_{cathode}*, obtaining a volume flow rate *Q_{cathode}* of the cathode air flow and determining a normalized ratio (*Δp_{cathode}*/*Q_{cathode}*)*ₙₒᵣₘ*;
determining a degree of flooding *DoF* as a function of the quantities ***σ** (V_{cell})ₙₒᵣₘ,* (*Δp_{anode}*/*Q_{anode}*)*ₙₒᵣₘ* and (*Δp_{cathode}*/*Q_{cathode}*)*ₙₒᵣₘ* for each of the PEM fuel cells in the fuel cell stack, wherein the *DoF* function is defined such that the function is strictly monotonously rising with each of the afore-mentioned three quantities; and
issuing a flooding prewarning if the degree of flooding for a PEM fuel cell in the fuel cell stack is greater than a first threshold value and smaller than a second threshold value larger than the first threshold value, and issuing a flooding alarm if the degree of flooding value for the PEM fuel cell in the fuel cell stack exceeds the second threshold value.

In other words, the monitoring of stack of PEM fuel cells corresponds to the monitoring of a single PEM fuel cell, except that instead of the anode and cathode pressure drops over each of the individual cells in the fuel cell stack the total anode and cathode pressure drops are measured and divided by the number of cells in the fuel cell stack to obtain an average anode and cathode pressure drop to be used besides the individually determined normalized standard deviation ***σ**(V_{cell})ₙₒᵣₘ* for each cell in the fuel stack; otherwise each cell in the fuel cell stack is monitored in the same manner as described before for the monitoring of a single PEM fuel cell.

With the present invention an innovative method for real-time monitoring and alerting of flooding conditions in PEM fuel cells is provided. To implement the method arrangements are required which involve hardware and software aspects. On the hardware side high-precision pressure sensors are utilized on both the anode (at least one sensor at the inlet and at least one sensor at the outlet of the anode flow field) and the cathode (at least one sensor at the inlet and at least one sensor at the outlet of the cathode flow field), cell voltage monitors, means for inputting the volume flow rates supplied to the anode and to the cathode, respectively, connecting lines for real-time data transmission and computing devices to control data acquisition and transmission. All such hardware components are commercially available. The software aspect involves an algorithm that calculates a degree of flooding (*DoF*) utilizing the acquired pressure drops, cell output voltage signal data and the volume flow rates of hydrogen and of air supplied to the anode and cathode, respectively. The algorithm that performs the calculation can be executed on a computer located close to the location of the PEM fuel cells, on a remote computer or in a cloud computing service.

According to the present invention the monitoring method utilizes three quantities that are calculated from the measuring parameters cell output voltage as function of time, pressure drop divided by volume flow rate for the anode and cathode, respectively: ***σ** (V_{cell})ₙₒᵣₘ,* (*Δp_{anode}*/*Q_{anode}*)*ₙₒᵣₘ* and (*Δp_{cathode}*/*Q_{cathode}*)*ₙₒᵣₘ.* The function of these three quantities as input variables that determines the degree of flooding *DoF* is strictly monotonously rising with each of the three quantities, i.e. the function value increases with increasing values along any of the three axes representing the three above-mentioned three quantities. As mentioned above a preferred function is $DoF = {\left[σ{\left({V}_{cell}\right)}_{norm}\right]}^{α} + {\left[{\left(\frac{{Δp}_{cathode}}{{Q}_{cathode}}\right)}_{norm}\right]}^{β} + {\left[{\left(\frac{{Δp}_{anode}}{{Q}_{anode}}\right)}_{norm}\right]}^{γ}$ with exponents α, β, and γ greater than 1.

The above formula efficiently quantifies the pressure drops in the anode and cathode flow field plates, wherein water drops in the flow channels are responsible for increasing pressure drop with increasing amounts of water in the flow field plates, and the instability of cell voltage signals, expressed by the normalized standard deviation of the cell voltage measurements, caused by flooding in the gas diffusion layers or catalyst layers of the anode and cathode. The method is particularly sensitive to anode flooding, which is known to cause irreversible carbon corrosion which significantly reduces the service life of the fuel cell.

The advantages of the method according to the present invention can be summarized as follows:
**Rapid response to anode flooding:** The change in pressure drop, being a direct physical reaction to obstacles (e.g. water droplets) in the flow channels, occurs immediately (within milliseconds) regardless of cell voltage. This is crucial for early warning as material degradation can only be avoided before it occurs.

**Combination of physical and electrical-chemical measurements:** The *DoF* function used by the algorithm takes into account both the anode and cathode pressure drops, as well as voltage signals in terms of voltage fluctuations (expressed by the standard deviation value of the voltage signals). Cell voltage fluctuation is an indirect indicator of flooding but is relevant to the frequencies of water redistributions inside the gas diffusion layers, catalyst layers, and flow channels of the anode and cathode flow plates. The combination of both pressure drops (primary indicator for flooding in the flow channels of the flow field plates) and voltage fluctuations (indicator for flooding in the gas diffusion layers and catalyst layers) provides sensitive and fast responding alerts and a quantitative evaluation of the degree of flooding *DoF,* allowing for timely intervention to prevent potential damage to the fuel cell.

**In situ, non-destructive and non-interruptive:** The pressure sensors at the inlet and outlet of the anode and cathode flow field plates and cell voltage monitors are commonly installed for standard industrial fuel cell stacks and systems; thus, the signals can be acquired in an in situ and non-destructive manner without extra hardware. It is also non-interruptive to cell power output at nominal constant-load operating conditions, in contrast to method involving the recording of polarization curves.

**Applicable to individual cells, cell stacks and systems:** from single-cell to multiple-cell applications, the pressure drops are averaged by measuring pressures at the inlet and at the outlet of the fuel stack (comprising a series connection of fuel cells) so that the pressure drop over the entire fuel cell stack is measured (and divided by the number of cells in the stack) which is why high-precision pressure sensors are required to be sensitive to flooding events in a single cell or very few cells in the fuel cell stack. Additionally, the degree of flooding *DoF* can be calculated for each cell given the voltage fluctuation data collected for each cell by the cell voltage monitors, making it possible to identify the position of a cell which undergoes flooding in system applications, wherein the pressure drop contributions from system components (including gas supply pipelines, pre-distribution channels and post-distribution channels) should be subtracted from the calculation via baseline calibration. The method requires no complex sensors or extra devices, making it suitable for wide adoption in industrial fuel cell applications.

**Extended fuel cell service life:** By providing early warnings of potential flooding issues, a human operator or a process control unit can apply appropriate and timely strategies to mitigate flooding effects, thereby avoiding irreversible degradation and thus contributing to a long lifespan of the fuel cells.

The invention will be described with reference to the accompanying drawings in which:
Fig. 1 is a schematical cross-sectional view of a PEM fuel cell for illustrating the operation of the fuel cell;
Fig. 2 is a graph of the degree of flooding calculated according to a method of the present invention as a function of gas relative humidity; and
Fig. 3 is a block diagram of fuel cell measuring components and a flow diagram of a method according to the present invention utilizing the measured data for monitoring and alerting.

The basic design and principle of operation of the PEM fuel cell schematically illustrated in cross-section in Fig. 1 have already been described above with reference to Fig. 1.

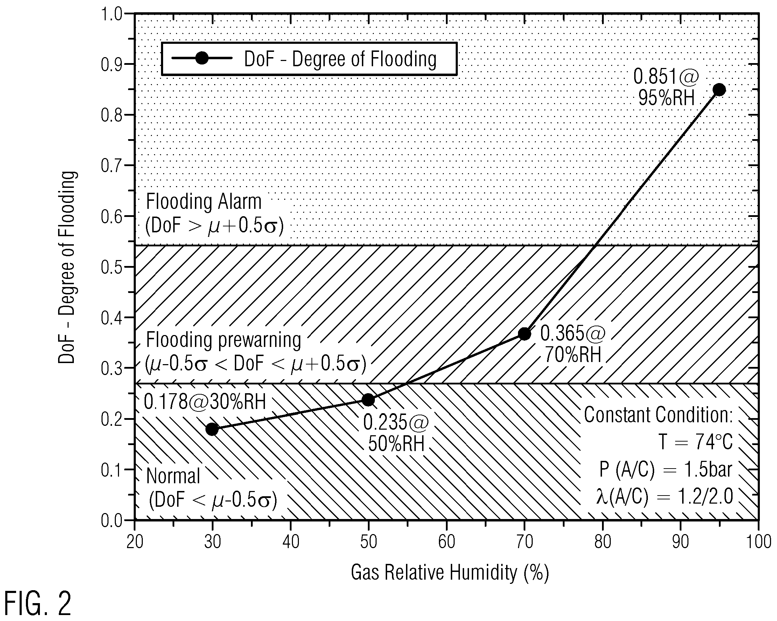

Fig. 2 shows the graph of the determined degree of flooding as a function of the gas relative humidity, wherein the gas relative humidity is measured at the air and hydrogen inlet pipelines of the PEM fuel cell before air and hydrogen are entering the bipolar plates.

The PEM fuel cell is operated at constant conditions with a temperature T = 74°C, pressure P = 1.5 bar at anode and cathode, and with a surplus factor λ which indicates by which factor the gas feed flow supplied is greater than the stoichiometric rate, wherein this λ factor is 1.2 for the hydrogen feed flow supplied to the anode and is 2.0 for the air feed flow supplied to the cathode.

For calculation of the degree of flooding *DoF* the already above-described formula is used: $DoF = {\left[σ{\left({V}_{cell}\right)}_{norm}\right]}^{α} + {\left[{\left(\frac{{Δp}_{cathode}}{{Q}_{cathode}}\right)}_{norm}\right]}^{β} + {\left[{\left(\frac{{Δp}_{anode}}{{Q}_{anode}}\right)}_{norm}\right]}^{γ}$ wherein based on experimental results a good correlation between DoF and the relative humidity in the fuel cell was found for **α** = 1.5, β = 2, and **γ** = 3. These exponents are appropriate for typical PEM fuel cells, whereas in case of special PEM fuel cells adjustments to the vales of the exponents

As can be seen from the graph in Fig. 2 the calculated degree of flooding values increase strictly monotonously with the gas relative humidity which demonstrates that the calculated degree of flooding is a good indicator for the amount of water present in the fuel cell and can thus be used, in connection with first and second thresholds, to distinguish between a normal operation zone which is the lowest band indicated in the graph of Fig. 2 in which the determined degree of flooding is below the horizontal line at 1/2 standard deviation below the average *DoF*, i.e. the line *DoF = µ - 0.5 **σ**,* wherein the average value *µ* is calculated from measurements at various RH operating conditions and the corresponding standard deviation is denoted as ***σ**.*

Above the normal operation band is the flooding prewarning band which is defined between the horizontal lines at the degrees of flooding of *DoF = µ* - *0.5 **σ*** and *DoF = µ* + *0.5 **σ**.* If a degree of flooding value in the flooding prewarning band is calculated, the method according to the present invention issues a flooding prewarning which can be received by a human operator or by additional control units as a trigger to take measures to improve the operating conditions of the fuel cell.

The third band of degrees of flooding is above the horizontal line at *DoF = µ + 0.5 **σ***. If a degree of flooding is calculated that is above the second horizontal line at *DoF = µ* + *0.5 **σ*** the calculated *DoF* indicates presence of a sufficiently high gas relative humidity to conclude that the PEM fuel cell undergoes flooding. In this situation a flooding warning is issued which can be received by a human operator and/or by a control unit configured to immediately alter the operating condition of the fuel cell towards operating conditions with lower degree of flooding.

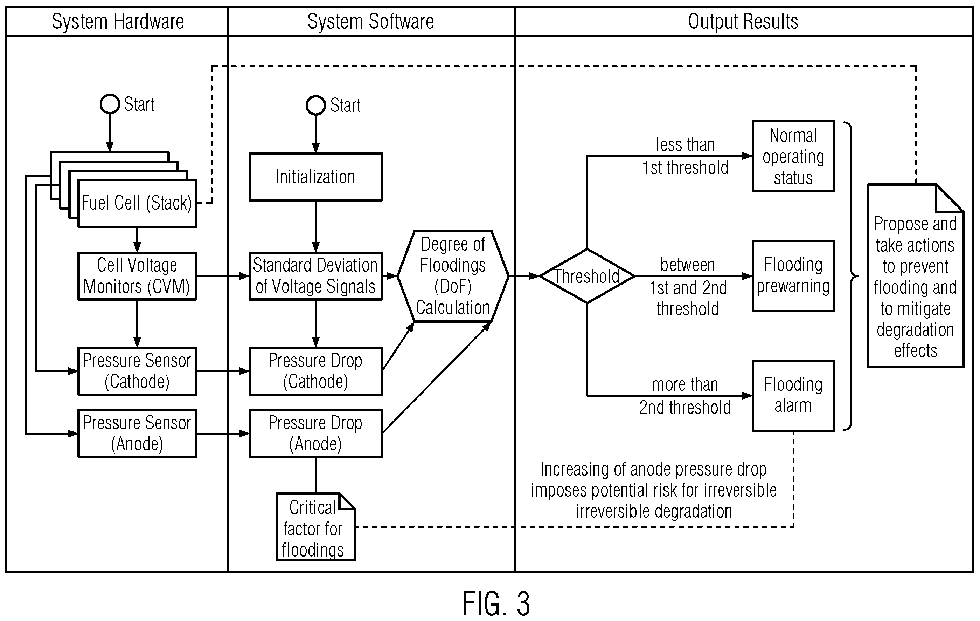

Fig. 3 illustrates a block diagram of the hardware and measurement components on the lefthand side and flow diagrams of the monitoring and detecting method according to the present invention in the central and right-hand side columns. The central column shows the determination of the normalized standard deviation of cell output voltage *σ(V_{cell})ₙₒᵣₘ,* the normalized values of pressure drop to volume flow rate *Δp_{cathode}*/*Q_{cathode}* and *Δp_{anode}*/*Q_{anode}* for cathode and anode and the use of these quantities as input variables in a degree of flooding calculation such as: $DoF = {\left[σ{\left({V}_{cell}\right)}_{norm}\right]}^{α} + {\left[{\left(\frac{{Δp}_{cathode}}{{Q}_{cathode}}\right)}_{norm}\right]}^{β} + {\left[{\left(\frac{{Δp}_{anode}}{{Q}_{anode}}\right)}_{norm}\right]}^{γ}$ with **α** = 1.5, β = 2, and **γ** = 3.

Depending on the calculated degree of flooding and its relation to the first and second thresholds either a normal operating status is found, or a flooding prewarning or a flooding alarms is issued depending on whether the calculated *DoF* is between the first and second threshold or above the second threshold.

## Claims

1. Method for determining and monitoring a degree of flooding in a PEM fuel cell, **characterized by** comprising the steps:
measuring output voltage values of the PEM fuel cell as a function of time over a time window and determining a normalized standard deviation ***σ**(V_{cell})ₙₒᵣₘ* of measured cell voltage values;
within the time window determining a pressure drop *Δp_{anode}* of hydrogen flow over an anode flow field of the PEM fuel cell and obtaining a volume flow rate *Q_{anode}* of the anode hydrogen flow and determining a normalized ratio (*Δp_{anode}*/*Q_{anode}*)*ₙₒᵣₘ*;
within the time window determining a pressure drop *Δp_{cathode}* of air flow over a cathode flow field of the PEM fuel cell and obtaining a volume flow rate *Q_{cathode}* of the cathode air flow and determining a normalized ratio (*Δp_{cathode}*/*Q_{cathode}*)*ₙₒᵣₘ*;
determining a degree of flooding DoF as a function of the quantities ***σ**(V_{cell})ₙₒᵣₘ,* (*Δp_{anode}*/*Q_{anode}*)*ₙₒᵣₘ* and (*Δp_{cathode}*/*Q_{cathode}*)*ₙₒᵣₘ,* wherein the *DoF* function is defined such that the function is strictly monotonously rising with each of the afore-mentioned three quantities; and
issuing a flooding prewarning if the degree of flooding is greater than a first threshold value and smaller than a second threshold value larger than the first threshold value, and issuing a flooding alarm if the degree of flooding value exceeds the second threshold value.

2. Method according to claim 1, **characterized in that**
for normalization of the determined quantities an extensive initial calibration run is carried out with the PEM fuel cell, wherein the calibration run includes (i) operating the PEM fuel cell at dry operating conditions for a first calibration period during which data for the cell voltage *V_{cell}*, for (*Δp_{anode}*/*Q_{anode}*) 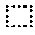 and for (*Δp_{cathode}*/*Q_{cathode}*) 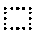 are acquired as a function of time, the standard deviation ***σ** (V_{cell})* of the measured cell voltage values is determined and average values for (*Δp_{anode}*/*Q_{anode}*) 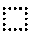 and (*Δp_{cathode}*/*Q_{cathode}*) 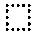 are determined and the determined standard deviation ***σ**(V_{cell})* is stored as minimum standard deviation *σ*(*V_{cell}*)*ₘᵢₙ*, the average of (*Δp_{anode}*/*Q_{anode}*) 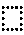 is stored as minimal ratio (*Δp_{anode}*/*Q_{anode}*)*ₘᵢₙ* and the average of (*Δp_{cathode}*/*Q_{cathode}*) 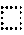 is stored as a minimal ratio (*Δp_{cathode}*/*Q_{cathode}*)*ₘᵢₙ*; and (ii) operating the PEM fuel cell at wet operating conditions for a second calibration period including acquiring the above-mentioned data and storing determined ***σ** (V_{cell})* as maximum standard deviation *σ(V_{cell})ₘₐₓ*, the average of (*Δp_{anode}*/*Q_{anode}*) 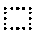 as a maximal ratio (*Δp_{anode}*/*Q_{anode}*)*ₘₐₓ* and the average of (*Δp_{cathode}*/*Q_{cathode}*) 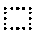 as a maximal ratio (*Δp_{cathode}*/*Q_{cathode}*)*ₘₐₓ.*

3. Method according to claim 2, **characterized in that**
the normalized standard deviation ***σ** (V_{cell})ₙₒᵣₘ* of cell voltage values is calculated from the standard deviation ***σ** (V_{cell})_{measured}* of measured cell voltage values by: $σ {\left({V}_{cell}\right)}_{norm} = \frac{σ {\left({V}_{cell}\right)}_{measured} - σ {\left({V}_{cell}\right)}_{min}}{σ {\left({V}_{cell}\right)}_{max} - σ {\left({V}_{cell}\right)}_{min}}$
the normalized anode ratio (*Δp_{anode}*/*Q_{anode}*)*ₙₒᵣₘ* is calculated for the measured ratio (*Δp_{anode}*/*Q_{anode}*)*_{measured}* by: ${\left(\frac{{Δp}_{anode}}{{Q}_{anode}}\right)}_{norm} = \frac{{\left(\frac{{Δp}_{anode}}{{Q}_{anode}}\right)}_{measured} - {\left(\frac{{Δp}_{anode}}{{Q}_{anode}}\right)}_{min}}{{\left(\frac{{Δp}_{anode}}{{Q}_{anode}}\right)}_{max} - {\left(\frac{{Δp}_{anode}}{{Q}_{anode}}\right)}_{min}}$
the normalized cathode ratio (*Δp_{cathode}*/*Q_{cathode}*)*ₙₒᵣₘ* is calculated for the measured ratio (*Δp_{cathode}*/*Q_{cathode}*)*_{measured}* by: ${\left(\frac{{Δp}_{cathode}}{{Q}_{cathode}}\right)}_{norm} = \frac{{\left(\frac{{Δp}_{cathode}}{{Q}_{cathode}}\right)}_{measured} - {\left(\frac{{Δp}_{cathode}}{{Q}_{cathode}}\right)}_{min}}{{\left(\frac{{Δp}_{cathode}}{{Q}_{cathode}}\right)}_{max} - {\left(\frac{{Δp}_{cathode}}{{Q}_{cathode}}\right)}_{min}}$

4. Method according to claim 2 or 3, **characterized in that** dry operating conditions have a relative humidity of air flow and hydrogen flow below 20% at an elevated operating temperature of 90°C and that wet operating conditions have a relative humidity above 90% at a low operating temperature of 50°C.

5. Method according to claim 1 or 2, **characterized in that** the standard deviation σ *(V_{cell})_{measured}* of measured cell output voltage values is calculated as a rolling standard deviation with the time window being a moving time window.

6. Method according to claim 5, **characterized in that** each of the two ratios of pressure drop of hydrogen flow across the anode flow field of the PEM fuel cell to the anode volume flow rate (*Δp_{anode}* / *Q_{anode}*)_{measured} of the hydrogen flow, and of air flow pressure drop over the cathode flow field to the air volume flow rate *(Δp_{cathode}* / *Q_{cathode}*)_{measured} of the cathode air flow is determined as a moving average value in the moving time window.

7. Method according to claim 5 or 6, **characterized in that** the time window is within the range from 10 seconds to 60 seconds.

8. Method according to any of the preceding claims, **characterized in that** the *DoF* function is defined as $DoF = {\left[σ{\left({V}_{cell}\right)}_{norm}\right]}^{α} + {\left[{\left(\frac{{Δp}_{cathode}}{{Q}_{cathode}}\right)}_{norm}\right]}^{β} + {\left[{\left(\frac{{Δp}_{anode}}{{Q}_{anode}}\right)}_{norm}\right]}^{γ}$ wherein α, β, and γ are real, positive exponents greater than 1.

9. Method according to claim 8, **characterized in that** the exponents **α**, β, and **γ** fulfil the relation: **α** ≤ β ≤ **γ**.

10. Method according to claim 9, **characterized in that** the exponent α is within the interval [1.25, 1.75], the exponent β is within the interval [1.75, 2.25], and the exponent **γ** is within the interval [2.75, 3.25].

11. Method according to claim 9, **characterized in that** the exponent α is 1.5, the exponent β is 2, and the exponent **γ** is 3.

12. Method for determining and monitoring a degree of flooding in PEM fuel cells arranged in series in a fuel cell stack, **characterized by** comprising the steps:
measuring output voltage values of the PEM fuel cell as a function of time over a time window and determining a normalized standard deviation ***σ**(V_{cell})ₙₒᵣₘ* of measured cell voltage values for each of the PEM fuel cells in the fuel cell stack;
within the time window determining a total pressure drop of hydrogen flow over the anode flow fields of the PEM fuel cells of the fuel cell stack, dividing the total pressure drop over the anodes of the fuel cell stack by the number of fuel cells in the fuel cell stack to determine an average anode pressure drop per fuel cell *Δp_{anode}*, obtaining a volume flow rate *Q_{anode}* of the anode hydrogen flow and determining a normalized ratio (*Δp_{anode}*/*Q_{anode}*)*ₙₒᵣₘ*;
within the time window determining a total pressure drop *Δp_{cathode}* of air flow over the cathode flow fields of the PEM fuel cells of the fuel cell stack, dividing the total pressure drop over the cathodes of the fuel cell stack by the number of fuel cells in the fuel cell stack to determine an average cathode pressure drop per fuel cell *Δp_{cathode}*, obtaining a volume flow rate *Q_{cathode}* of the cathode air flow and determining a normalized ratio (*Δp_{cathode}*/*Q_{cathode}*)*ₙₒᵣₘ*;
determining a degree of flooding DoF as a function of the quantities ***σ**(V_{cell})ₙₒᵣₘ,* (*Δp_{anode}*/*Q_{anode}*)*ₙₒᵣₘ* and (*Δp_{cathode}*/*Q_{cathode}*)*ₙₒᵣₘ* for each of the PEM fuel cells in the fuel cell stack, wherein the DoF function is defined such that the function is strictly monotonously rising with each of the afore-mentioned three quantities; and
issuing a flooding prewarning if the degree of flooding for a PEM fuel cell in the fuel cell stack is greater than a first threshold value and smaller than a second threshold value larger than the first threshold value, and issuing a flooding alarm if the degree of flooding value for the PEM fuel cell in the fuel cell stack exceeds the second threshold value.
